**Europäisches Patentamt**

**European Patent Office**

**Office européen des brevets**

(19)

(11) **EP 1 248 426 A2**

(12) **EUROPEAN PATENT APPLICATION**

(43) Date of publication:
**09.10.2002 Bulletin 2002/41**

(51) Int Cl.7: **H04L 27/00**, H04L 27/26

(21) Application number: **02100345.4**

(22) Date of filing: **05.04.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **06.04.2001 US 282128**
**08.05.2001 US 289130**

(71) Applicant: **Texas Instruments Incorporated**
**Dallas, Texas 75251 (US)**

(72) Inventor: **REDFERN, Arthur John**
**Texas 75025, Plano (US)**

(74) Representative: **Holt, Michael et al**
**Texas Instruments Ltd.,**
**EPD MS/13,**
**800 Pavilion Drive**
**Northampton Business Park,**
**Northampton NN4 7YL (GB)**

(54) **A low peak-to-average ratio quiescent mode architecture and signal design method for DMT modems**

(57)     A physical layer is presented which maps an all zero bit stream to a DMT symbol with low PAR. This allows the AFE to save power while the physical layer of the modem operates identically for both Showtime and Idle data. A minimum amount of changes relative to the existing DMT transmitter architecture are required, most notably the removal of a scrambler from the physical layer and the addition of an XOR mapping (17) and symbol inverter (25). A method is presented for designing the XOR mapping which takes into account upsampling and filtering in the AFE.

FIG. 1

**Description**

Field of Invention:

This invention relates to discrete multitone (DMT) modems, such as asymmetric digital subscriber line (ADSL) modems, and more particularly to a power conserving state known as Quiescent mode (Q-mode).

Background of Invention:

ADSL modems employing DMT modulation are used for internet access. The ADSL standard is described in S.Palm (ed), "Asymmetrical Digital Subscriber Line (ADSL) Transceivers," ITU-T Q4/SG15, G.992.1, 1999, incorporated herein by reference. ADSL modems are well known. For example see U.S. Patent No. 6,055,268 of Timm et al. For DMT modems see U.S. Patent No. 5,400,322; 5,479,447;5,317,596 and 5,285,474. These patents are incorporated herein by reference. Q-mode is a proposed power conserving idle state that an ADSL modem can enter when it has no data to transmit. To prevent the generation of pulsating crosstalk, an ADSL modem should transmit an idle signal in the power conserving state with an average power similar to that of a data signal. Pulsating crosstalk occurs when the average power of the signal on the line changes, affecting neighboring lines in a bundle. Since most modems perform better with stationary crosstalk, it is desirable to minimize changes to the average power of the signal on the line. By reducing the peak-to-average ratio (PAR) of the idle signal without changing the average power, the ADSL analog front end (AFE) can achieve a power savings without disrupting neighboring lines in a bundle.

Summary of Invention:

In accordance with one embodiment of the present invention for the power saving Q-Mode, when there is no data to transmit the PAR of the signal is reduced while the average power of the signal remains the same. The low PAR Q-mode signal design takes the effects of the AFE into account in finding a low PAR signal. The Q-mode signal is tailored to the AFE and loaded subchannels to realize maximum power savings.

Description of Drawings:

Figure 1 illustrates a DMT transmitter architecture according to one embodiment of the present invention which allows for alignment of an all zero bit stream with low PAR DMT symbol;

Figure 2 illustrates a receiver for Q-mode according to one embodiment;

Figure 3 illustrates a conceptual view of the exclusive-or (XOR) mapping with no inner code;

Figure 4 illustrates a conceptual view of the XOR mapping with 4D trellis coded modulation (TCM);

Figure 5 illustrates the points in a 8 bit constellation within $\pm$ 1.5 dB of the average power of the constellation;

Figure 6a illustrates upsampling and filtering and Figure 6b to the equivalent polyphase representation;

Figure 7 illustrates the frame clipping probability of a normal or Showtime DMT signal for a given allowed PAR;

Figure 8 illustrates Showtime and Q-mode PAR for a 26 gauge (AWG) 12 kft channel with allowed constellation points within $\pm$ 1.5 dB of the average power for the constellation; and

Figure 9 illustrates a mapping of a zero input.

Description of Preferred Embodiments of the Present Invention:

A provisional application serial no. 60/282,128 for the subject invention was filed on April 6,2001 for the inventor Arthur Redfern. This application is incorporated herein by reference.
In a number of Q-mode proposals, the transmission convergence (TPS-TC) layer converts Idle data into an all zero bit stream which propagates down to the physical layer. If the bits to DMT symbol mapping maps the all zero bit stream to a low PAR DMT symbol, power savings can be achieved in the AFE. Additionally, if the transmitter and receiver process Showtime (normal data transmissions) and Idle data identically, then the transmitter can achieve the power savings without requiring the intervention of the receiver.

The following sections present an architecture for mapping an all zero bit stream to a low PAR DMT symbol. Notable aspects of the proposed architecture include:

- A minimal amount of changes and complexity increase over the existing DMT transmitter (most notably the removal of a scrambler and the addition of an XOR mapping and symbol inverter).
- A power for each subchannel similar to that of the average power for the constellation to minimize the generation of pulsating crosstalk.
- A simple method for optimizing the mapping for a given bit loading and AFE.
- Identical operation for Showtime and Idle data.
- Compatibility with TCM, turbo, and low density parity check (LDPC) inner codes.
- Compatibility with all timing recovery methods.

Simulation results illustrate the ability of the proposed architecture and optimization procedure to map an all zero bit stream to a low PAR signal for a variety of channels.

Architecture:

The architecture section describes the physical layer DMT transmitter architecture used to form the low PAR mapping, and the constraints on the XOR mapping.

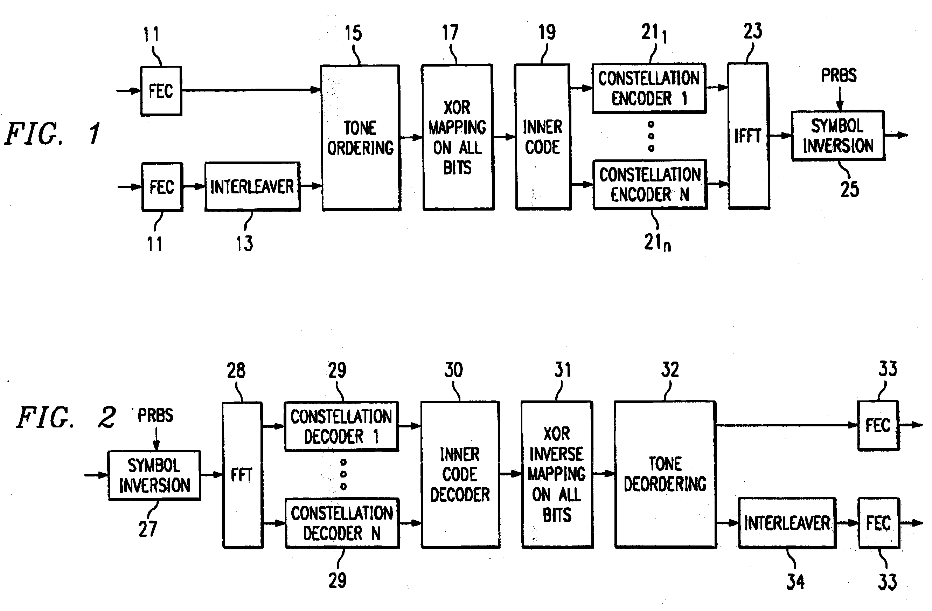

Figure 1 illustrates the proposed architecture for the DMT transmitter. The DMT transmitter architecture allows for the alignment of an all zero bit stream with a low PAR DMT symbol. The inner code includes no code, TCM, turbo, and LDPC schemes. Before the physical layer shown in Fig. 1 there is the data input, framing and access control. Forward error connection (FEC) 11, interleaving 13, and tone ordering 15 are applied to the data bits. The XOR mapper 17 provides mapping to all of the bits of the output of the tone ordering. The inner code 19 and constellation encoders $21_l$-$21_n$ are applied to the output of the XOR mapping 17. The Inverse Fast Fourier Transform (IFFT) 23 and symbol inversion 25 are applied to the encoded constellation points. Although not shown in Fig. 1, after the symbol inversion there is digital to analog conversion and amplification before coupling to a channel such as a twisted pair wire.

The XOR mapping 17 is chosen such that it maps an all zero bit stream into a low PAR DMT symbol (its design will be considered in PAR Minimization section). The symbol inverter 25, controlled by a pseudo random binary sequence (PRBS), is used to prevent the generation of a transmitted sequence with a period equal to that of the DMT symbol period. The XOR mapping 17 and symbol inverter 25 are applied to all data.

The receiver is illustrated in Fig. 2. In the receiver operations take place in the reverse order with the received signal undergoing analog to digital conversion, symbol inversion 27, Fast Fourier Transform (FFT) processing 28, constellation decoding 29 to bits, innercode decoding 30, XOR inverse mapper 31 providing inverse mapping, tone deordering 32 and FEC 33 decoding. Notice that the XOR mapping 17 occurs before the inner code 19 at the transmitter, and after the inner code 30 at the receiver. This allows existing constellation mappers, TCM encoders/decoders, and other advanced inner codes to be used without modification.

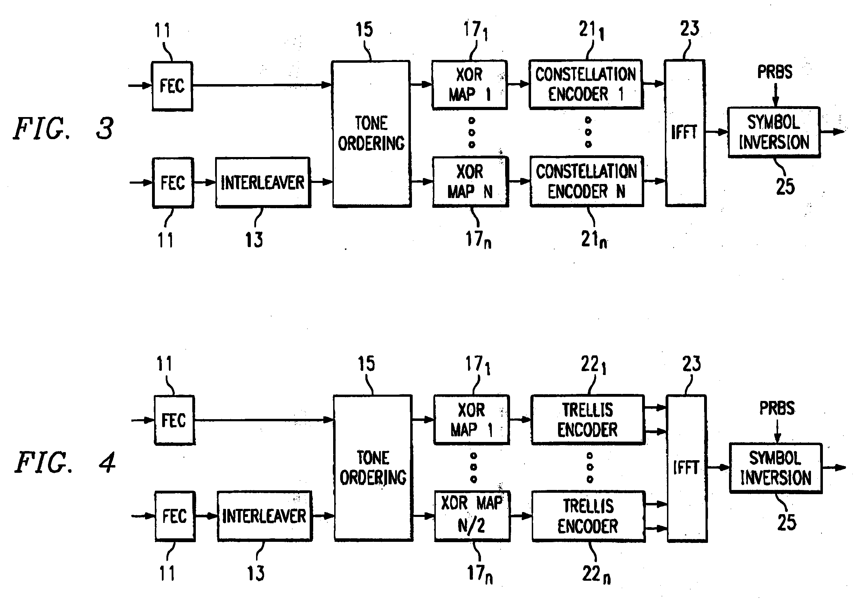

Figure 1 shows the XOR mapping 17 being applied to the whole tone ordered bit sequence. However, in the design of the mapping it is often more convenient to think of its effects on each subchannel. Figures 3 and 4 show how the mapping can be conceptually viewed as operating on subchannels individually (for the case of no inner code), or operating on a pair of subchannels at a time (for the case of 4D TCM). Figure 3 illustrates conceptual view of the XOR mapping with no inner code. The XOR mapping can be thought of as divided into N parts ($17_l$ - $17_n$), with each part associated with a subchannel. Figure 4 illustrates conceptual view of the XOR mapping $17_l$ - $17_n$ with 4D TCM (Trellis-coded modulation) with Trellis encoders $22_l$-$22_n$. The XOR mapping can be thought of as divided into N/2 parts $22_l$-$22_n$, with each part associated with 2 subchannels.

Mapping Constraints:

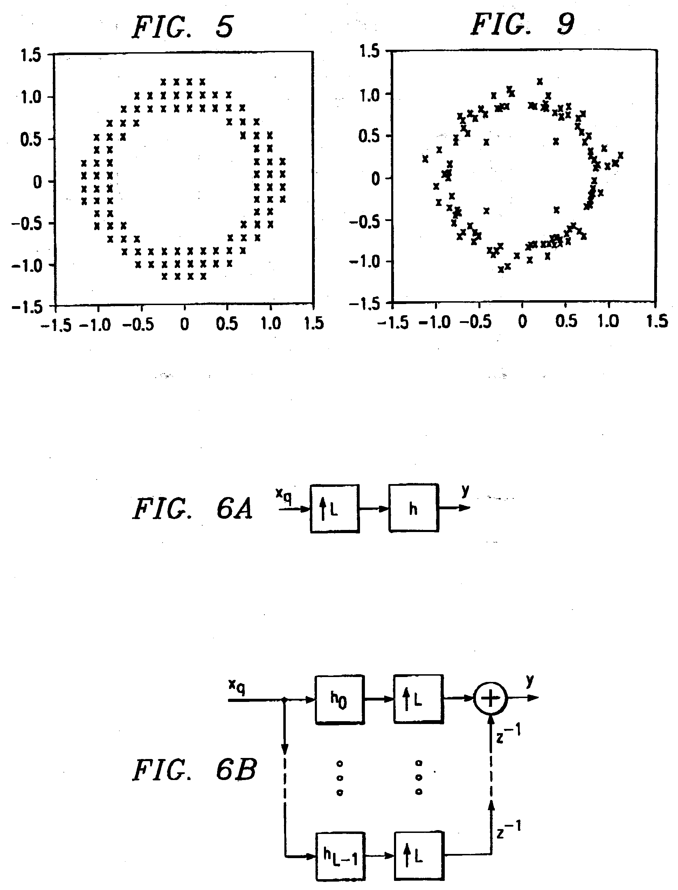

A constraint on the XOR mapping is that for each subchannel it maps a zero input to a constellation point whose power is within some range of the average power of the constellation for that subchannel. As an example, Figure 5 plots all of the points within ±1.5 dB of the average power for an 8 bit constellation. In general, this type of power constraint forms a ring. Table 1 lists the number of points within ±1.5 dB of the average power for 2, ..., 15 bits. The more points in the constellation, the more degrees of freedom there will be in the design of the mappings.

In the choice of the XOR mappings, the mapping design procedure needs to be aware of the effect of the inner code on the mapping. The inner code will modify some or all of the bits depending on the choice of the code.

Since the goal is to have the signal after the IFFT a low PAR signal, and the code occurs between the mapping and the IFFT, the effects of the code need to be taken into account in the design of the mapping. Different methods for taking into account the effects of the inner code include:

- Finding the desired constellation point for each subchannel using the normal operation (as if there was no inner code), then using a decoder to find the corresponding bits before coding and thus the closest mapping. The mapping can be further refined by iterating and leaving the mapping on the coded bits fixed.
- Choosing the mapping such that the coded bits result in different distributions of allowed sets of signal points (i.e. roughly the same number of points in coset 0 ,1,2 and 3 for TCM with a 4 set partitioning). This is done to break up any possible patterns that the coded bits might generate which would result in an artificially high PAR signal. The uncoded bits are then optimized.
- Choosing a mapping that leaves the coded bits unchanged (thus only applying the optimization to the uncoded bits). This avoids the effects of the inner code between the XOR mapping and the IFFT.
- Choosing a quasi-random mapping for the coded bits (and only applying the optimization to the coded bits). This is done to break up any possible patterns that the coded bits might generate which would result in an artificially high PAR signal. The uncoded bits are then optimized.

As an example, consider a rate 3/4 4D TCM code. The code takes in 3 bits and outputs 4 bits, 2 bits for each of 2 subchannels. There's a number of different ways to handle the effects of the inner code in the XOR mapping design. Possibilities include:

- Finding the desired constellation point for each subchannel with only the average power constraint, then using a Viterbi decoder to determine the closest valid input (and thus mapping). The XOR mapping for the uncoded bits can then be further refined.
- Setting the XOR mapping to zero for each of the 3 input bits to the TCM encoder, such that the output will always be in coset 0. Effectively, when combined with the average power constraint, the XOR mapping will have 1/4 the number of points per subchannel to use in its optimization.
- Choosing quasi-random allowed bit sequence for the coded bits (which fixes the corresponding bits in the XOR mapping), then optimizing the mapping on the uncoded bits. This is similar to the coset 0 constraint, but prevents alignment in the phases of the 2 and 3 bit constellations.

For TCM, the performance of the coset 0 constraint will be the worst of the above three.

Table 1 lists the number of points within $\pm1.5$ dB of the average power for 2, ..., 15 bits with the label constrained to coset 0. However, in the Simulations section it will be shown that good PAR reduction can even be achieved for this case. The number of constellation points in the original G.dmt constellation, the set of points within $\pm1.5$ dB of the average power for the constellation, and the set of points within $\pm1.5$ dB of the average power for the constellation in coset 0. For the 3 bit constellation, the 4 lowest power points were counted even though they are less than 1.5 dB below the average power.

Similar possibilities exist for other choices of the inner code (e.g., turbo or LDPC). Again, it is important to note that the choice of the XOR mapping does not effect the operation of the inner code.

Table 1

| Bits | Original Points | Points within $\pm1.5$ dB of the Average Power | Points within $\pm1.5$ dB of the Average Power in Coset 0 |
|---|---|---|---|
| 2 | 4 | 4 | 1 |
| 3 | 8 | 4* | 1* |
| 4 | 16 | 8 | 2 |
| 5 | 32 | 12 | 3 |
| 6 | 64 | 28 | 7 |
| 7 | 128 | 36 | 9 |
| 8 | 256 | 100 | 25 |
| 9 | 512 | 196 | 49 |
| 10 | 1024 | 372 | 93 |

Table 1   (continued)

| Bits | Original Points | Points within ±1.5 dB of the Average Power | Points within ±1.5 dB of the Average Power in Coset 0 |
|---|---|---|---|
| 11 | 2048 | 736 | 184 |
| 12 | 4096 | 1496 | 374 |
| 13 | 8192 | 2932 | 733 |
| 14 | 16384 | 6052 | 1513 |
| 15 | 32768 | 11696 | 2924 |

PAR Minimization:

In this section we consider the design of the XOR mapping for the transmitter architecture and mapping constraints. The optimal signal for PAR reduction is dependent on the bit loading (i.e., the channel and noise) and AFE. A method is presented which incorporates the bit loading and AFE into the optimization criteria. Note that other optimization methods can be used to form mappings which map a zero bit stream to a low PAR DMT signal.

Instead of directly optimizing the XOR mapping, we find a frequency-domain signal, referred to as the Q-mode signal, which results in a low PAR DMT signal (after modulation or before the amplifier, depending on the optimization criteria). Since the constraints on the mapping are incorporated into optimization, once the Q-mode signal has been found the XOR mapping is known (it is simply the required bit modifications to transform the all zero sequence into the Q-mode signal).

Notation:

Denote the frequency-domain Q-mode signal as $X_q$ and the time-domain Q-mode signal after modulation as $x_q$. $X_q$ and $x_q$ are related through the discrete Fourier transform (DFT) matrix $F$ and inverse discrete Fourier Transform (IDFT) matrix $F^H$:

$$X_q = Fx_q$$

$$x_q = F^H X_q.$$

If $x_q$ is real, $X_q$ is conjugate symmetric.

Q-mode signals typically have some constraint on the constellations of their individual subchannels. Let the function $C$ model the constraint on the Q-mode constellation such that $C$ maps its input to a valid Q-mode symbol (e.g., if the constraint is that the allowed constellation points for an individual subcharge are within ±1.5 dB of the average power of the original constellation for that subchannel, then $C$ will quantitize that component of its input to an allowed point). Note that if $X_q$ is a valid Q-mode signal, then:

$$X_q = C(X_q). \tag{2}$$

Thus a valid Q-mode signal is mapped to itself by the constraint on the constellation.

The indicator function $G$ is defined as one on loaded Q-mode subchannels, and zero on unloaded Q-mode subchannels. $G$ effectively selects the loaded subchannels and zeros out the rest. We can write $G$ as a diagonal matrix with ones corresponding to loaded subchannels, and zeros elsewhere. If $X_q$ is a valid Q-mode signal, then:

$$X_q = GX_q. \tag{3}$$

Thus a valid Q-mode signal is mapped to itself by the indicator function which selects valid subchannels.

The PAR of a Q-mode signal is defined as:

$$\mathrm{par}\!\left(x_q\right) = \frac{\left\|x_q\right\|_\infty^2}{E\!\left[\left|x_q\right|^2\right]} \; , \qquad\qquad (4)$$

where the infinity norm of $x_q$ is the peak of the absolute value of $x_q$, and $E$ denotes ensemble average. To assist in the derivation of a low PAR Q-mode signal, we use a hardlimiter model of an amplifier, $f_M$, with an input-output relationship:

$$f_M\!\left(x_q\right) = \left\{ \begin{array}{ll} M, & x_q > M \\ x_q, & \left|x_q\right| \le M \\ -M, & x_q < M. \end{array} \right. \qquad\qquad (5)$$

For a fixed average power, the lower the PAR of $x_q$, the smaller $M$ can be made such that the hardlimiter does not clip its input.

Signal Design:

We would like to find the lowest PAR signal $x_q$, (and the associated $X_q$) that does not clip. Using the hardlimiter model (5), this can be written as:

$$f_M\!\left(x_q\right) - x_q = 0 \, .$$

$$(6)$$

Rearranging terms and taking the DFT of both sides of (6) yields:

$$X_q = F f_M \, (F^H X_q). \qquad\qquad (7)$$

The constellation (2) and subchannel (3) constraints are then applied to (7) to force $X_q$ to a valid Q-mode signal:

$$X_q = GC(F f_M (F^H X_q)). \qquad\qquad (8)$$

Equation (8) can be used to design the Q-mode signal. This is done by starting with an initial guess for $X_q$, and iterating. If $X_q^{(t)}$ is the estimate of the Q-mode signal at the $t$th iteration, then:

$$X_q^{(t)} = GC(F f_M (F^H X_q^{(t-1)})). \qquad\qquad (9)$$

Notice that with each iteration, the Q-mode signal is first projected onto the set of signals that do not clip, then onto the set of signals that satisfy some given constraint, then onto the set of loaded subchannels. Different rates of convergence can be obtained by rewriting (2) as

$$X_q^{(t)} = X_q^{(t-1)} + \alpha (X_q^{(t-1)} - GC(F f_M (F^H X_q^{(t-1)}))). \qquad\qquad (10)$$

where $\alpha$ is a scalar.

Incorporating Upsampling and Filtering:

Typical AFE's have upsamplers and filters before the amplifier. Since the goal is to have a low PAR amplifier input, the effects of the AFE should be taken into account if they alter the PAR.

**[0029]** The combination of upsampling and filtering can be viewed in a multirate framework (see Figure 6 wherein Figure 6a illustrates the upsampling and filtering and Figure 6b illustrates the equivalent polyphase representation). Notice that the maximum peak for the amplifier input is the maximum peak of the individual polyphase filter outputs:

$$x_q * h_l, \qquad l = 0,...,L - 1. \tag{11}$$

Updating the clip criteria (6) for the polyphase filter output (11) results in:

$$f_M (x_q * h_l) - x_q * h_l = 0, \qquad l = 0,...,L - 1. \tag{12}$$

Taking the DFT of both sides of (12) and rearranging terms yields:

$$H_l \ X_q \ = \ Ff_M \ (F^H \ H_l \ X_q)$$
$$X_q \ = \ H_l^{-1} \ Ff_M \ (F^H \ H_l \ X_q), \quad l \ = \ 0, \ldots, L \ -1, \tag{13}$$

where $H_l$ is a diagonal matrix formed from the DFT of $h_l$. The constellation (2) and subchannel (3) constraints are applied to (13), resulting in:

$$X_q = GC(H_l^{-1} Ff_M (F^H H_l X_q)), \qquad l = 0,...,L - 1. \tag{14}$$

From (14) we see that upsampling by a factor of $L$ forces $X_q$ to simultaneously satisfy $L$ equations.

$X_q$ is solved for by iterating on (14) while cycling through the subchannels. This can be written as

$$X_q^{(t)} = GC(H_l^{-1} Ff_M (F^H H_l X_q^{(t-1)})), \qquad l = 0,...,L - 1. \tag{15}$$

where for $l = 1, ..., L - 1$, $X_q^{(t-1)}$ is the output of the iteration for phase $l - 1$, and for $l = 0$, $X_q^{(t-1)}$ is the output of the iteration for $l = L - 1$. As before, different rates of convergence can be obtained by rewriting (15) as

$$X_q^{(t)} = X_q^{(t-1)} + \alpha(X_q^{(t-1)} - GC(H_1^{-1} Ff_M (F^H H_1 X_q^{(t-1)}))), \qquad l = 0,...,L - 1. \tag{16}$$

The parameter $M$ controls the PAR of the Q-mode signal. For some choices of the constellation constraint $C$, the perturbation in the update for $X_q$ is not strong enough to ensure that $X_q^{(t)} \neq X_q^{(t-1)}$, even though the desired PAR is exceeded (this is often the case when the constraint $C$ quantizes all of its inputs to 4-QAM, and the amount of clipping is small). For cases such as this, the value of $M$ can be further reduced to generate stronger perturbations.

If the desired level of $M$ is not known ahead of time, then the minimization of $M$ can be incorporated into the iteration. This is done by choosing an initial $X_q$ and calculating the value of $M$ such that $X_q$ does not clip. $M$ is then reduced, and a new $X_q$ is found (through iteration) such that it no longer clips. This process is then repeated, until an $X_q$ cannot be found that does not clip for a given $M$.

Multiple Signal Design:

In some cases more than one bit sequence needs to be mapped to a low PAR DMT signal by the transmitter. When there is no relation between these signals, the optimizations in signal design section and incorporation upsampling and filtering section can be applied to the signals individually. However, often there is some relationship between the signals (e.g., two signals which are the negative of each other except for the pilot subchannel). For a related set of $K$ Q-mode signals $\{X_{ql}, ..., X_{qK}\}$, let $R_{jk}$ transform $X_{qj}$ to $X_{qk}$:

$$X_{qk} = R_{jk} (X_{qj}). \tag{17}$$

The iterations in the previous sections ((equations (9), (10), (15), (16)) can be modified to take this relationship into account. This is done by performing an iteration for $X_{qi}$, transforming the result to $X_{qj}$, transforming the result of $X_{qk}$, and continuing. The output of the iteration for signal $X_{qi}$, after transformation, becomes the input for signal $X_{qj}$. If necessary, all signals can be cycled through multiple times until the desired PAR is obtained.

XOR Mapping Updating:

Asynchronous digital subscriber line (ADSL) systems allow for modifications to the bit mapping to be made by the receiver (e.g., using bit swap). In this section a method is provided which allows for the XOR mapping to accommodate changes to the bitmap without requiring additional communication between the transmitter and receiver. Additionally, the transmitter can make simple changes to the XOR mapping to refine the PAR of the mapping of the all zero signal without having to retransmit the whole XOR mapping.

Consider a transmit direction with $N$ subchannels (e.g. 32, 128 or 256), each which can support a maximum of $B$ bits. The initial master XOR mapping is formed by the transmitter conveying to the receiver a 0 or 1 for each of the $N$ subchannel's $B$ bits. This is done for all subchannels and bits, regardless of how many bits are initially loaded on a subchannel. From the master XOR mapping a current XOR mapping is formed by extracting the number of information bits loaded on each of the subchannels.

For coding schemes which output bits for two subchannels at a time (e.g., 4D TCM), the same method is used with mappings formed for two subchannels at a time (e.g., $N/2$ pairs of subchannels each with a maximum of $2B$ - 1 uncoded bits).

As an example, consider a simplified ADSL system with $N$ = 4 subchannels, each of which can support a maximum of $B$ = 6 bits. Let the initial bit loading and master XOR mapping be given as in Table 2.

From the master XOR mapping and bitmap, a current XOR mapping is formed by taking the first 4 bits from subchannel 0, the first 3 bits from subchannel 1, the first 2 bits from subchannel 2, and no bits from subchannel 3. The resulting current XOR mapping (which is then used to XOR the input bit stream) is:

current XOR mapping = [001111010].

Now consider a bit swap where a bit is removed from subchannel 1 and a bit is added to subchannel 2. The resulting bit loading is shown in Table 3 (note that the master XOR mapping does not change).

From the master XOR mapping and new bitmap, a new current XOR mapping is formed by taking the first 4 bits from subchannel 0, the first 2 bits from subchannel 1, the first 3 bits from subchannel 2, and no bits from subchannel 3. The resulting new current XOR mapping (which is now used to XOR the input bit stream) is:

new current XOR mapping = [001111101].

If the transmiter wants to refine the Q-mode signal by modifying the XOR mappings, the transmitter can send the receiver a message which contains the subchannel number and new XOR mapping for the $B$ bits. Thus it is not necessary to send a new mapping for all subchannels each time the transmitter wants to update the mapping on only a few subchannels.

Table 2

| Subchannel | Bits | Master XOR Mapping |
|---|---|---|
| 0 | 4 | 001101 |
| 1 | 3 | 110010 |
| 2 | 2 | 101011 |
| 3 | 0 | 011000 |

Table 3

| Subchannel | Bits | Master XOR Mapping |
|------------|------|--------------------|
| 0 | 4 | 001101 |
| 1 | 2 | 110010 |
| 2 | 3 | 101011 |
| 3 | 0 | 011000 |

Simulations:

In this section we present some simulation results which illustrate ability of the proposed Q-mode architecture and mapping design algorithm to map an all zero bit stream to a low PAR DMT symbol. Simulations are done for the downstream of a frequency division multiplexed (FDM) ADSL system with subchannels 33 - 255 available for bit loading (the number of subchannels used is dependent on the channel). Various length of 26 AWG twisted pair considered with - 140 dBm/Hz additive white Gaussian noise (AWGN) present at the output. A 9.8 dB constellation loss, 6 dB margin, and 3 dB coding gain were used to generate the various bit loadings.

Two different cases were considered for the constraints on the mappings. For the first case the allowed points were required to be within $\pm$ 1.5 dB of the average power for the constellation. For the second case, in addition to the average power constraint the points were required to be in coset 0. Note that this is the worst case for PAR reduction with TCM, and actual performance will tend to fall between these two cases.

Table 4 shows the average power and PAR for a zero bit stream mapped with the two described constraints and a Showtime signal for comparison. Average power (for relative comparison) and PAR for different loops lengths (i.e., bit loadings) for the original ADSL constellation, the set of points within $\pm$ 1.5 dB of the average power for the constellation, and the set of points within $\pm$ 1.5 dB of the average power for the constellation in coset 0. The PAR of the original DMT signal is approximately 15.5 dB at a frame clipping probability of $10^{-6}$. Note that the PAR minimization algorithm tends to reduce the overall power by 1 - 1.2 dB, in addition to reducing the PAR of the signal (so in actuality, the peak level relative to the Showtime signal is even further reduced). Additionally, shorter channels have higher bit loadings, and thus allow more degrees of freedom in the design of the XOR mapping. As a result, they are able to achieve the most PAR reduction.

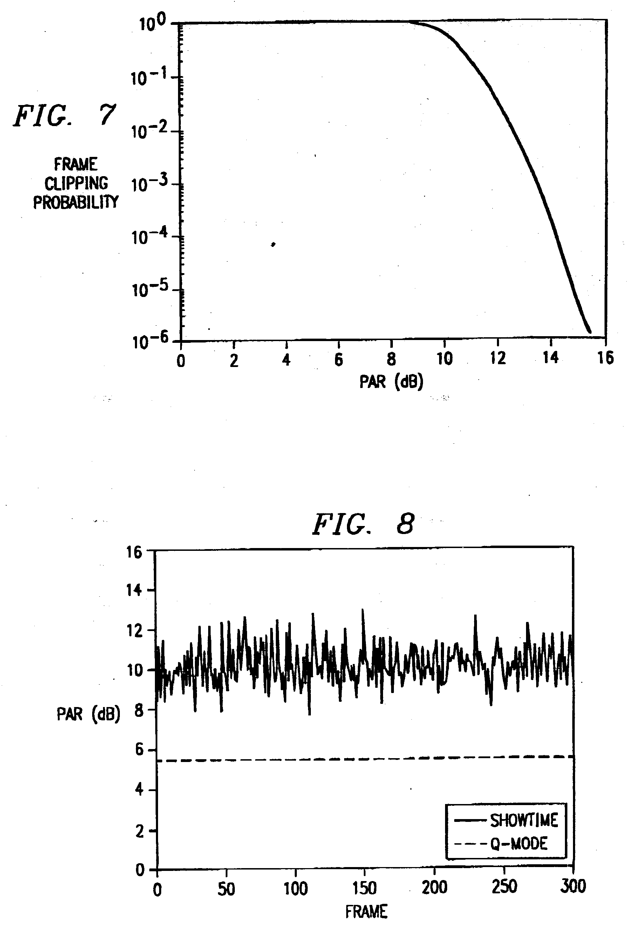

The 15.5 dB Showtime PAR was for an approximate frame clipping probability of $10^{-6}$, as shown in Figure 7. Figure 8 shows the PAR of the mapped zero signal relative to a Showtime signal over 300 frames. Showtime and Q-Mode PAR for a 26 AWG 12 kft channel with allowed constellation points within $\pm$ 1.5 dB of the average power for the constellation. Figure 9 illustrates mapping of a zero input after optimization for a 26 AWG 12 kft channel.

Table 4

| 26 AWG Loop | Average Power (dB) | | | PAR (dB) | | |
|-------------|--------------------|--------------------|--------------------|--------------------|--------------------|--------------------|
| Length (kft) | Origina 1 Points | $\pm$1.5 dB Points | $\pm$1.5 dB Points in Coset 0 | Origina 1 Points | $\pm$1.5 dB Points | $\pm$1.5 dB Points in Coset 0 |
| 3 | -0.59 | -1.91 | -1.85 | 15.5 | 3.90 | 4.02 |
| 6 | -0.60 | -1.82 | -1.92 | 15.5 | 4.21 | 4.40 |
| 9 | -0.60 | -1.72 | -1.45 | 15.5 | 4.26 | 5.15 |
| 12 | -2.09 | -3.03 | -2.61 | 15.5 | 5.62 | 8.86 |
| 15 | -4.59 | -5.61 | -5.00 | 15.5 | 7.37 | 9.32 |

Conclusions:

A method for mapping an all zero bit sequence to a DMT symbol with low PAR is presented. Since this mapping can be used with all bit sequences, the transmitter does not need to transmit a special symbol for Q-mode. Thus, the operation of Q-mode is transparent to the physical layer. A method for determining the mapping was given which takes the bit loading and AFE into account, allowing the PAR to be optimized for the observed channel conditions.

**Claims**

1. In a discrete multitone (DMT) modem, the improvement for conserving power comprising:

   an invertible mapper applied before encoding bits to symbols; said mapper mapping a chosen stream of bits representing idle data to a low peak-to-average ratio (PAR) symbol.

2. A modem as in Claim 1 wherein said modem includes an inner code following said invertible mapping.

3. A modem as in Claim 1 or 2 wherein said mapping has the constraint that for a set of subchannels the zero input is mapped to a constellation point where the power is within some range of the average of the constellation for that subchannel.

4. A modem as in any one of Claims 1-3 wherein said mapping is specified by a low PAR signal optimized by constraining the constellation points on each subchannel and constraining the subchannels being transmitted for providing a low PAR signal.

5. A method of optimizing a low PAR signal to be transmitted from a DMT transmitter when there is zero input data comprising the steps of:

   invertible mapping a chosen stream of bits representing idle data before encoding; said invertible mapping constraining the constellations on each subchannel and constraining the subchannels being transmitted for providing a low PAR signal.

6. A method as in Claim 5 wherein a polyphase representation of the upsampling and filtering are incorporated into the optimization.

7. A method as in Claim 5 or 6 wherein said DMT transmitter includes an inner code and bits affected by said inner code are handled by the steps of finding a desired constellation point for each subchannel, then using a decoder finding the corresponding bits before coding and thus the closest mapping.

8. A method as in any of Claims 5-7, including the step of further refining uncoded bits while leaving the mapping on the coded bits fixed.

9. A method as in any of Claims 5-8 wherein said DMT transmitter includes an inner code and bits affected by said inner code are handled by choosing the mapping such that the coded bits result in different distributions of allowed sets of signal points then optimizing the uncoded bits.

10. A method as in any of Claims 5-9 wherein said DMT transmitter includes an inner code and bits affected by an inner code are handled by choosing a quasi-random mapping for the coded bits and then optimizing the uncoded bits.

*FIG. 1*

*FIG. 2*

EP 1 248 426 A2

*FIG. 3*

FEC → INTERLEAVER → TONE ORDERING → XOR MAP 1 / XOR MAP N → CONSTELLATION ENCODER 1 / CONSTELLATION ENCODER N → IFFT → SYMBOL INVERSION

11  11  13  15  $17_1$  $17_n$  $21_1$  $21_n$  23  PRBS  25

*FIG. 4*

FEC → INTERLEAVER → TONE ORDERING → XOR MAP 1 / XOR MAP N/2 → TRELLIS ENCODER / TRELLIS ENCODER → IFFT → SYMBOL INVERSION

11  11  13  15  $17_1$  $17_n$  $22_1$  $22_n$  23  PRBS  25

## FIG. 5

## FIG. 9

## FIG. 6A

## FIG. 6B

FIG. 7

FRAME
CLIPPING
PROBABILITY

FIG. 8

PAR (dB)